# EUROPÄISCHE PATENTSCHRIFT

(11) **EP 3 495 190 B1**
(45) Veröffentlichungstag und Bekanntmachung des Hinweises auf die Patenterteilung: **18.03.2026**
(21) Anmeldenummer: 18202078.4
(22) Anmeldetag: 23.10.2018
(51) Int. Cl.: B60L 5/08, B60L 5/40

(54) **STROMABNEHMER UND SCHLEIFLEITUNGSSYSTEM**
COLLECTOR AND SLIDING CONTACT SYSTEM
DISPOSITIF DE CAPTAGE DE COURANT ET SYSTÈME DE LIGNES DE CONTACT

(30) Priorität: 28.11.2017 DE 102017128173
(43) Veröffentlichungstag der Anmeldung: 12.06.2019
(73) Patentinhaber: Conductix-Wampfler GmbH, 79576 Weil am Rhein (DE)
(72) Erfinder: Lang, Dietmar, 79418 Schliengen (DE)
(74) Vertreter: Charrier Rapp & Liebau

(56) Entgegenhaltungen:
- CH-A5- 584 116
- DE-A1- 102015 101 848
- JP-U- S5 525 753
- US-A- 976 942

## Beschreibung

Die Erfindung betrifft einen Stromabnehmer nach dem Oberbegriff des Anspruchs 1 und ein Schleifleitungssystem.

Die JP S55 25753 U offenbart einen Stromabnehmer für eine Schleifleitung, bei dem ein Schleifkontakt mittels einer in Zustellrichtung angeordneten, in einem Hohlzylinder geführten ersten Feder und zweier in Querrichtung zur Fahrrichtung und Zustellrichtung angeordneten zweiten und dritten Federn in Zustellrichtung bzw. in Querrichtung gegenüber der Schleifleitung federn gelagert ist. Dabei ist die erste Feder senkrecht zur zweiten und dritten Feder angeordnet, wobei der Hohlzylinder der ersten Feder für die Bewegung in Zustellrichtung seinerseits an den beiden anderen Federn angeordnet ist. Hierdurch wird dem Schleifkontakt in Zustellrichtung und Querrichtung ein gewisses Nachgeben erlaubt. Allerdings ist diese Ausgestaltung aufwendig im Aufbau und benötigt drei Einzelfedern, um dieses Ziel zu erreichen.

Die DE 10 2015 101 849 A1 offenbart Schleifleitungssystem mit einem Stromabnehmer für einen in eine Fahrrichtung längs einer Schleifleitung verfahrbaren elektrischen Verbraucher, mit mindestens zwei an einer Wippe in Fahrrichtung hintereinander angeordneten Schleifstücken, wobei die Wippe um eine senkecht zur Fahrrichtung verlaufende Drehachse an einem Kipparm gelagert ist, durch den die Wippe zur Kontaktierung der Schleifstücke mit einem elektrisch leitenden Leiterstrang der Schleifleitung zum Leiterstrang hin bewegbar ist. Dabei weist die Wippe einen Kipparm auf, auf dem ein Federarm gleitet, der bei Auslenkung der Wippe aus einer Ruhestellung gespannt wird und die Wippe zur Ruhestellung hin drückt. Dieser Stromabnehmer ermöglicht zwar ein sicheres Anpressen der Schleifkohle in ihrer Zustellrichtung an die Schleifleitung hin, Bewegungen der Schleifkohle quer zur Längsrichtung und abweichend von der Zustellrichtung können aber nicht ausgeglichen werden, so dass die Schleifkohle im Betrieb u.U. ständig an eine Seitenwand des Leitungsprofils der Schleifleitung gedrückt und somit einseitig abgenutzt wird und im schlimmsten Fall sogar bricht. Auch besteht bei einseitig an der Schleifleitung anliegender Schleifkohle die Gefahr des Verkantens, insbesondere beim Überfahren der Schnittstellen zwischen zwei Schleifleitungsabschnitten. Zudem muss die Schleifkohle beim Einfädeln in die Schleifleitung sehr genau positioniert werden, da ein seitlicher Versatz kaum ausgeglichen werden kann.

Die GB 487 923 offenbart eine Stromabnehmerkonstruktion für einen Fahrdraht eines O-Busses bei dem ein Schleifkontakt um dreigeometrische, zueinander senkrechten geometrischen Drehachsen drehbar ist. Um zu verhindern, dass der Stromabnehmer von der Oberleitung wegspringt, ist dort vorgesehen, dass der Schleifkontakt um eine parallel zu dem Fahrdraht und oberhalb darüber verlaufende Achse oszillieren kann. Hierdurch kann der Schleifkontakt eine Bewegung des oszillierenden Fahrdrahtes gut ausgleichen.

Die CH 584 116 A5 offenbart einen Stromabnehmer für Trolleybusse mit einer Stromabnehmerstange, einem Schleifschuhträger und einem einen Fahrdraht zu berühren bestimmten Schleifschuh, wobei zwischen der Stromabnehmerstange und dem Schleifschuh mindestens ein Torsions-Federelement vorgesehen ist zur Dämpfung von auf dem Schleifschuh einwirkenden horizontalen und/oder vertikalen Stößen, Schlägen und Schwingungen. Dieses Torsionsfederelement erlaubt nur geringfügige Abweichungen und dient hauptsächlich der Dämpfung von auf den Schleifschuh einwirkenden Stößen.

Die DE 91 03 696.8 offenbart eine mechanisch spannungsarme Befestigung eines elektrisch leitend mit einer metallischen Unterlage fest verbundenen, für die Übertragung elektrischer Ströme bestimmten Schleifstücks auf einem starren Träger mit einem Befestigungselement wie Schrauben, Muttern oder Nieten, die an der fest mit dem Schleifstück verbundenen metallischen Unterlage verankert und durch in dem starren Träger befindliche Bohrungen geführt sind und auf der dem Schleifstück abgewandten Seite des starren Trägers festgelegt sind. Um eine Befestigung eines elektrisch leitend mit einer metallischen Fassung fest verbundenen Kohlenstoffschleifstücks mit einem starren Träger zu schaffen, bei der keine Beeinträchtigung der Festigkeit oder Brüche des Schleifstücks durch Temperaturwechsel mehr auftreten, ist dort vorgesehen, dass die Befestigungselemente mit Federelementen versehen sind, die zwischen dem von Schleifstück wegweisenden Ende der Befestigungselemente als einen Wiederlager und dem starren Träger als zweiten Wiederlager gespannt sind. Dabei ist das Schleifstück aufgrund der Befestigung am Träger lediglich in Zustellrichtung beweglich, und nicht in Querrichtung hierzu.

Die US 976 942 A offenbart einen Stromabnehmer für einen Oberleitungsbus, der durch zwei gegensinnig wirkende Federn in einer zentralen Mittelstellung gehalten wird. Die hierzu notwendige Konstruktion ist aufwendig und benötigt immer zwei Wiederlager für die gegensinnig wirkenden Federelemente.

Aufgabe der Erfindung ist es deshalb, einen Stromabnehmer und ein Schleifleitungssystem bereitzustellen, welche die oben genannten Nachteile überwinden und eine bessere und sichere Führung des Schleifkontakts an einer Schleifleitung sowie einen einfacheren Aufbau eines Stromabnehmers ermöglichen.

Die Erfindung löst die Aufgabe durch einen Stromabnehmer mit den Merkmalen des Anspruchs 1 sowie ein Schleifleitungssystem mit den Merkmalen des Anspruchs 13. Vorteilhafte Weiterbildungen und Ausgestaltungen der Erfindung sind in den Unteransprüchen angegeben.

Ein eingangs genannter Stromabnehmer ist erfindungsgemäß dadurch gekennzeichnet, dass zwischen Schleifkontakt und Halterung ein als Spiralfeder ausgebildetes Federelement vorgesehen ist. Durch das Federelement kann der Schleifkontakt in Querrichtung vorteilhaft in einer Normalstellung gehalten werden, wobei das Federelement zum einen eine Auslenkung des Schleifkontakts in Querrichtung aus der Normalstellung ermöglicht, zum anderen aber den Schleifkontakt wieder in Richtung der Normalstellung zieht.

Bevorzugt kann die Querrichtung dabei nur wenige Grad, insbesondere maximal 6° von der exakten, senkrecht zur Längsrichtung stehenden Richtung abweichen. Weiter kann der Schleifkontakt dabei in Längsrichtung ausgerichtet sein und sich mit seiner größten Länge in Längsrichtung erstrecken. Die Längsrichtung kann dabei bevorzugt mit der Bewegungsrichtung des Schleifkontakts bzw. Stromabnehmers übereinstimmen.

Vorteilhaft kann das Federelement am Schleifkontaktträger angeordnet sein, wodurch ein Austausch des sich im Betrieb abnützenden Schleifkontakts erleichtert wird. Dabei wirkt das Federelement in einem ersten Federbereich vor allem in Zustellrichtung und auf Druck. Hierdurch kann vor allem die Bewegung in Zustellrichtung erleichtert und z.B. eine durch Änderungen des Abstands zwischen dem beweglichen Verbraucher und der Schleifleitung bedingte Annäherung bzw. Entfernung zwischen Schleifkontakt und Schleifleitung besser ausgeglichen werden. Bevorzugt kann dabei ein größerer Hub des ersten Federbereichs erreicht werden.

Weiter wirkt das Federelement in einem zweiten Federbereich vor allem in Querrichtung und auf Zug. Hierdurch können vor allem in Querrichtung erfolgende Ablenkungen des Schleifkontakts aus seiner Normalstellung, insbesondere an bzw. in der Schleifleitung, besser ausgeglichen werden. So kann beispielsweise ein Durchhang der Schleifleitung in Bereich zwischen zwei Befestigungen der Schleifleitung durch eine Auslenkung des Schleifkontakts aus seiner Normalstellung in Querrichtung ausgeglichen werden, ohne dass der gesamte Stromabnehmer nachgeführt werden muss.

Durch die Verwendung von zwei Federbereichen mit unterschiedlichen Federeigenschaften kann auf einfache und kompakte Weise eine Entkopplung der Funktionen - Ausgleichen von Bewegungen in Querrichtung und Zustellrichtung - erreicht werden.

Weiter können vorteilhaft der Schleifkontakt und/oder der Schleifkontaktträger mindestens ein sich in Zustellrichtung erstreckendes Führungselement aufweisen, um eine verbesserte Führung in Zustellrichtung bereitzustellen. Dabei kann das Führungselement in einer Führung der Halterung in Zustellrichtung beweglich sein. Auch kann bevorzugt ein Anschlag des Führungselements mit einem in Zustellrichtung näher am Schleifkontakt liegenden Gegenanschlag der Führung zusammenwirken, um die maximale Bewegung in Zustellrichtung auf den Schleifkontakt hin zu begrenzen.

Bevorzugt kann zwischen Führungselement und Federelement ein Spiel in Querrichtung bestehen, um Querbewegungen zulassen zu können und diese durch Einstellung dieses Querspiels begrenzen zu können. Dabei kann vorteilhaft das Spiel in Querrichtung größer sein als ein Spiel zwischen dem Führungselement und Federelement in Längsrichtung, so dass zugleich ein möglichst geringes Ausweichen bzw. Verkippen des Schleifkontakts in Längsrichtung erreicht wird.

In einer vorteilhaften kompakten Ausgestaltung kann das Federelement das Führungselement umgeben. Dabei können das Federelement und das Führungselement einen voneinander unterschiedlichen Querschnitt aufweisen, wobei der Abstand zwischen Führungselement und Federelement in Querrichtung größer ist als in Längsrichtung. Auch kann vorteilhaft das Federelement einen kreisförmigen und das Führungselement einen von der Kreisform abweichenden Querschnitt haben, wobei der Abstand zwischen Führungselement und Federelement in Querrichtung größer ist als in Längsrichtung. Vorteilhaft ist dabei die Breite des Führungselements in Querrichtung geringer ist als die Länge des Führungselements in Längsrichtung. Durch obige Ausgestaltungen kann einfach eine gute und möglichst genaue Führung in Längsrichtung und Zustellrichtung sowie ein Ausweichen in Querrichtung verbessert werden.

Weiter kann das Federelement zumindest teilweise in der Führung angeordnet sein und sich an der Halterung zumindest einseitig abstützen, so dass eine gute seitliche Führung des Federelements in dem Bereich erreicht wird, innerhalb dessen es in der Führung angeordnet ist, während der aus der Führung herausstehende Teile freier beweglich ist. Bevorzugt kann der erste Federbereich ganz oder zum größten Teil in der Führung verlaufen, während der zweite Federbereich ganz oder zum größten Teil außerhalb der Führung verläuft.

Vorteilhaft kann die Zustellrichtung im wesentlichen senkrecht zur Längsrichtung verlaufen, während erfindungsgemäß die Querrichtung im wesentlichen senkrecht zur Längsrichtung und zur Zustellrichtung verläuft. "Senkrecht" oder "quer" bedeutet im Zusammenhang mit der vorliegenden Definition auch, dass eine gewisse Abweichung von der mathematisch strengen Definition umfasst ist, also beispielweise durch Toleranzen, ungenaue Fertigung oder Montage oder durch die Betriebsbedingungen oder Verschleiß bewirkte Abweichungen auch noch unter die Definition "senkrecht" oder "quer" fallen.

Ein eingangs genanntes Schleifleitungssystem ist erfindungsgemäß dadurch gekennzeichnet, dass zwischen Schleifkontakt und Halterung des Stromabnehmers ein als Spiralfeder ausgebildetes Federelement vorgesehen ist, wobei das Federelement in einem ersten Federbereich vor allem in Zustellrichtung und auf Druck wirkt, und wobei das Federelement in einem zweiten Federbereich vor allem in Querrichtung und auf Zug wirkt. Bevorzugt kann das Schleifleitungssystem wie oben und nachfolgend beschrieben und in den Zeichnungen dargstellt ausgebildet sein.

Die Erfindung wird nachfolgend anhand von detaillierten Ausführungsbeispielen mit Bezug auf die begleitenden Zeichnungen beschrieben. Diese zeigen:
- **Fig. 1**: eine Seitenansicht eines erfindungsgemäßen Schleifleitungssystems mit einem erfindungsgemäßen Stromabnehmer in einer von einer Schleifleitung entfernten Normalstellung;
- **Fig. 2**: eine Schnittansicht durch die Schleifleitung und den Stromabnehmer entlang der Schnittlinie A-A in Fig. 1;
- **Fig. 3**: eine Seitenansicht entsprechend Fig. 1 mit dem Stromabnehmer in einer kontaktierenden Betriebsstellung an der Schleifleitung;
- **Fig. 4**: eine Schnittansicht durch die Schleifleitung und den Stromabnehmer entlang der Schnittlinie A-A in Fig. 3;
- **Fig. 5**: eine untere Draufsicht auf das Schleifleitungssystem aus Fig. 3 entlang der Schnittlinie B-B;
- **Fig. 6**: eine Seitenansicht entsprechend Fig. 1 und 3 mit dem Stromabnehmer in einer maximal eingerückten Endstellung
- **Fig. 7**: eine schematische dreidimensionale Ansicht des Stromabnehmers aus Fig. 1 bis 6 in teilexplodierter Darstellung.

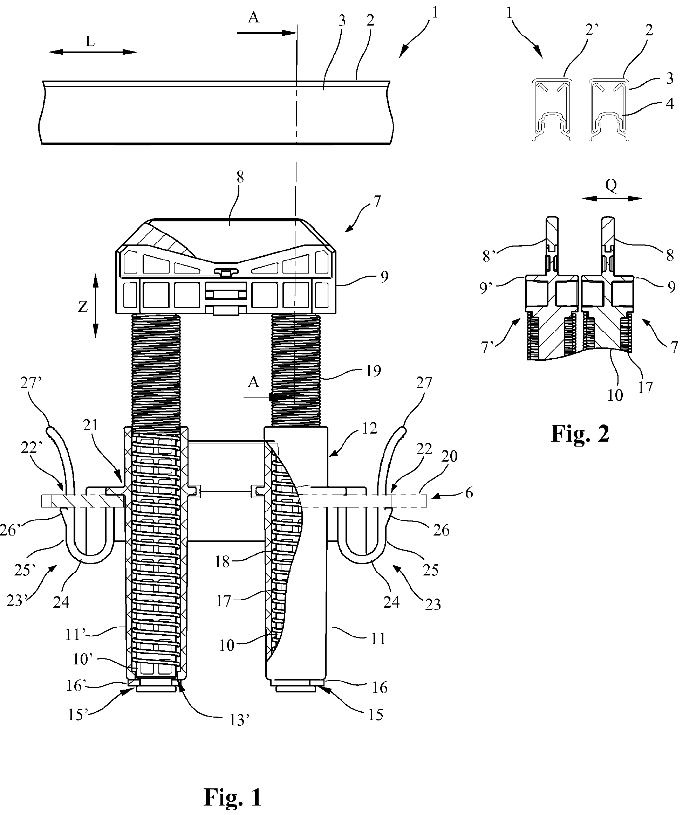

Fig. 1 zeigt eine Seitenansicht eines Abschnitts eines erfindungsgemäßen Schleifleitungssystems 1 mit einer in Längsrichtung L verlaufenden Schleifleitung 2. Die Schleifleitung 2 weist ein längliches, auf einer Seite offenes Isolierprofil 3 auf, welches ein längliches, elektrisch leitendes Phasenleiterprofil 4 mit eingebetteter elektrisch leitender länglicher Schleiffläche 5, bevorzugt aus Aluminium oder Stahl, umgibt.

Längs der Schleifleitung 2 ist ein zeichnerisch nur angedeuteter elektrischer Verbraucher 6 mit einem daran angeordneten Stromabnehmer 7 verfahrbar. Der Stromabnehmer 7 dient zur Versorgung des elektrischen Verbrauchers sowie der darauf installierten elektrischen Einrichtungen, beispielsweise einer Elektrohängebahn oder eines Containerkrans mit den unterschiedlichen elektrischen Fahr- und Hubantrieben.

Ein neben der Schleifleitung 2 bzw. dem Stromabnehmer 7 angeordnete weitere Schleifleitung 2' sowie weiterer Stromabnehmer 7' sind entsprechend ausgebildet, so dass die Ausführungen zur Schleifleitung 2 bzw. dem Stromabnehmer 7 entsprechend gelten.

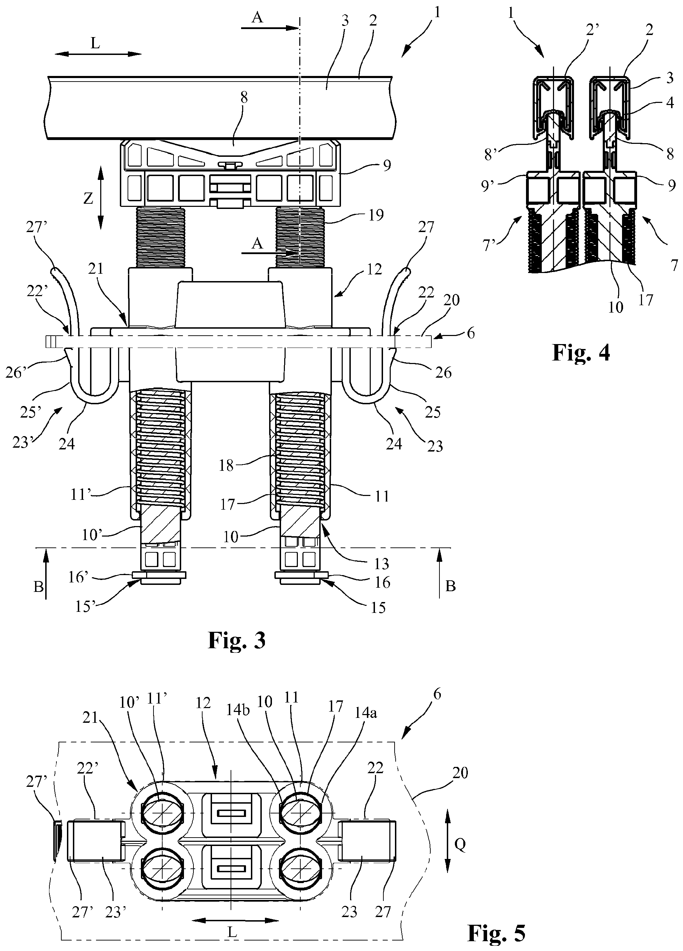

Der Stromabnehmer 7 weist einen bevorzugt als Schleifkohle ausgebildeten Schleifkontakt 8 auf, der im Betrieb an der Schleiffläche 5 entlangschleift, wie in Fig. 3, 4 und 6 gezeigt. Der Schleifkontakt 8 ist dabei über eine zeichnerisch nicht dargestellte elektrische Versorgungsleitung mit dem elektrischen Verbraucher bzw. dessen elektrischen Einrichtungen verbunden, um diese mit elektrischem Strom und Spannung versorgen zu können. Ein an sich bekannter, nicht gezeigter Zustellmechanismus ermöglicht das Einführen und Heranbewegen des gesamten Stromabnehmers 7 von und zur Schleifleitung 2.

Die oben beschriebene Ausgestaltung und Funktionsweise ist dem Fachmann grundsätzlich bekannt und Bedarf keiner weiteren Ausführungen.

Im Gegensatz zu den bekannten Stromabnehmern wird der Schleifkontakt 8 des erfindungsgemäßen Stromabnehmers 7 aber auf eine andere Art und Weise im Betrieb ständig in eine im wesentlichen senkrecht zur Längsrichtung L gerichtete Zustellrichtung Z auf die Schleifleitung 2 hin gegen die Schleiffläche 5 bewegt und daran angedrückt.

Hierzu ist der Schleifkontakt 8 an einem Schleifkontaktträger 9 angeordnet, welcher bevorzugt aus einem elektrisch nichtleitenden Material, besondere einem elektrisch isolierenden Material gebildet ist, beispielsweise einem Hartkunststoff. Der Schleifkontaktträger 9 weist dabei in Längsrichtung L hintereinander angeordnete Führungsschäfte 10, 10' auf, welche gleich ausgebildet sind. Die Erfindung wird deshalb nachher, so weit möglich und notwendig, anhand des Führungsschaft 10 erklärt. Entsprechende Angaben gelten auch für den anderen Führungsschaft 10, wobei entsprechende Teile mit entsprechenden Bezugsziffern und einem zusätzlichen Apostroph gekennzeichnet sind.

Der Führungsschaft 10 erstreckt sich in Zustellrichtung Z und weist den in Fig. 5 erkennbaren elliptischen Querschnitt auf, wobei sich die längere Achse der Ellipse in Längsrichtung L erstreckt, während sich die kürzere Achse in eine quer zur Längsrichtung L und bevorzugt quer zur Zustellrichtung Z verlaufende seitliche Querrichtung Q erstreckt.

Der Führungsschaft 10 greift durch eine hohlzylindrische Führungshülse 11 einer Halterung 12 des Stromabnehmers 7 an dem elektrischen Verbraucher 6. Eine für den weiteren Führungsschaft 10' vorgesehene Führungshülse 11' ist wiederum entsprechend ausgebildet wie die Führungshülse 11, so dass die Angaben hierzu entsprechend gelten.

Die Führungshülse 11 weist vorzugsweise einen hohlzylindrischen Querschnitt auf. An dem in den Zeichnungen unteren, dem Schleifkontakt 8 abgewandten Ende verengt sich die Führungshülse zu einer nach innen einkragenden Durchtrittsöffnung 13.

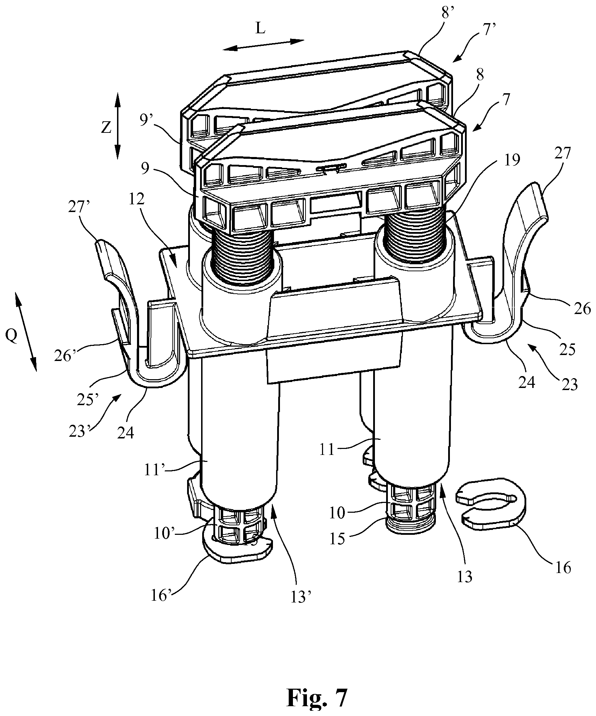

Wie in Fig. 1, 3, 6 und 7 gut erkennbar, ist am unteren, dem Schleifkontakt 8 abgewandten Ende des Führungsschafts 10 außerhalb der Durchtrittsöffnung 13 eine ganz umlaufenden Nut 15 vorgesehen, in die ein an einer Seite offenes Klemmelement 16, eingeschoben werden kann. Fig. 7 zeigt dabei auf der linken Seite ein Klemmelement 16' in der ganz auf eine Nut 15 aufgeschobene Stellung, während auf der rechten Seite das Klemmelement 16 vor dem Aufschieben gezeigt ist.

Bevorzugt kann das Klemmelement 16 mittels eines Schnappsitzes in der Nut 15 auf dem Führungsschaft 10 gehalten werden, so dass es gegen ein unerwünschtes Lösen, auch im Betrieb des Stromabnehmers 7, gesichert ist. Hierzu weist das Klemmelement 16 einen an die in Draufsicht gesehen elliptische Form der Nut 15 angepassten Innenumfang auf, so dass das Klemmelement 16 von der schmalen Seite der Nut 15 aufgeschoben werden kann. Dabei spreizen sich die beiden Schenkel des Klemmelements 16 etwas auf und schnappen dann am Ende wieder zusammen, so dass sich ein guter Sitz des Klemmelements 16 in der Nut 15 ergibt. Ein Vorteil des elliptischen Querschnitts der Nut 15 ist dabei, dass die Schenkel des Klemmelements 16 nicht so stark aufgespreizt werden müssen.

Weiter weist das Klemmelement 16 einen so großen Außenumfang auf, dass es über den Führungsschaft 10 seitlich hinaussteht und an der Durchtrittsöffnung 13 außenseitig, also von in den Zeichnungen unten, anschlägt. Somit dient das Klemmelement 16 als Anschlag an der als Gegenanschlag dienenden Außenseite der Durchtrittsöffnung 13. Hierdurch wird verhindert, dass der Führungsschaft 10 aus der Führungshülse 11 in Richtung der Schleifleitung herausfallen kann. Dies ist insbesondere von Vorteil für den Fall, dass die Schleifleitung 2 und der Stromabnehmer 7 waagrecht oder kopfüber montiert werden, also um 90° bzw. 180° zu der in Fig. 2 und 4 gezeigten Stellung gedreht.

Anstelle der im Ausführungsbeispiel gezeigten, an den im Querschnitt elliptischen Führungsschaft 10 angepassten Öffnung können die Nut 15 und das Klemmelement 16 auch andere einander entsprechende Formen aufweisen. Beispielsweise kann eine Ringnut vorgesehen werden, so dass dann das Klemmelement als Klemmring ausgebildet sein kann. Auch kann anstelle des hier aus Kunststoff gefertigten Klemmelements 16 ein anderes, die elastische Bewegung der Schenkel des Klemmelements ermöglichende Materialien verwendet werden, beispielsweise ein Metallbügel.

Auch kann in einer alternativen Ausgestaltung eine Unterlegscheibe mittels einer Befestigungsschraube o.ä. am herausstehenden Ende des Führungsschafts befestigt werden, wobei die Unterlegscheibe dann einen größeren Durchmesser aufweist als die Durchtrittsöffnung 13 und somit als Anschlag an der als Gegenanschlag dienenden Außenseite der Durchtrittsöffnung 13 dient.

Die Durchtrittsöffnung 13 hat ebenfalls im wesentlichen einen kreisförmigen Querschnitt, weist aber in Längsrichtung L einander gegenüberliegenden Positionierrücksprünge 14a, 14b auf.

Wie in Fig. 5 gut erkennbar, ist die längere Achse des elliptischen Querschnitts des Führungsschafts 10 in Längsrichtung L so bemessen, dass sie in den Positionierrücksprüngen 14a, 14b zu liegen kommt und der Führungsschaft 10 mit geringem Längsspiel ΔL in Längsrichtung L frei durch die Durchtrittsöffnung 13 durchgleiten kann. Die kürzere Achse des elliptischen Querschnitts des Führungsschafts 10 weist in Querrichtung Q hingegen einen großen Abstand zu dem sie umgebenden kreisrunden Querschnitt der Führungshülse 11 wie auch der Durchtrittsöffnung 13 auf, so dass sich ein großes Querspiel ΔQ in der Führungshülse 11 ergibt. Dabei ist der Schleifkontakt 8 und somit auch der Schleifkontaktträger 9 in den Zeichnungen jeweils in seiner Normalstellung bezüglich der Querrichtung Q gezeigt, also in nicht aus der Normalstellung ausgelenkten Stellung.

Die Führungsschäfte 10, 10' sind somit in den Führungshülsen 11, 11' in Querrichtung Q im Rahmen des Querspiels ΔQ beweglich, sodass ein seitlicher Querversatz des Schleifkontakts 8 durch das Querspiel ΔQ der Führungsschäfte 10, 10' ausgeglichen werden kann.

Durch den Formschluss der Querschnitte von Führungsschaft 10 und Führungshülse 11 in Längsrichtung L kann vorteilhaft auch erreicht werden, dass der Schleifkontakt 8 parallel zur Längsrichtung L und somit auch zur Schleifleitung 2 ausgerichtet wird und somit ein Verkanten in der Schleifleitung vermieden werden kann.

Anstelle des elliptischen Querschnitts des Führungsschafts 10 und des korrespondierenden kreisförmigen Querschnitts der Führungshülse 11 und der Durchtrittsöffnung 13 können auch andere aufeinander abgestimmte Querschnitte verwendet werden, bei denen sichergestellt ist, dass der Führungsschaft 10 in Querrichtung Q eine Querspiel ΔQ aufweist. Beispielsweise kann der Führungsschaft 10 rechteckigen Querschnitt aufweisen, und die Führungshülse 11 ebenfalls einen rechteckigen Querschnitt, wobei die Querschnitte in Längsrichtung L nur ein geringes Längsspiel ΔL aufweisen, während die Führungshülse 11 in Querrichtung Q deutlich breiter als der Führungsschaft 10 ist, um ein möglichst großes Querspiel ΔQ bereitzustellen.

Vorteilhaft kann es ausreichen, dass das große Querspiel ΔQ vor allem an dem der Schleifleitung 2 bzw. dem Schleifkontakt 8 zugewandten Ende der Führungshülse 11 gegeben ist.

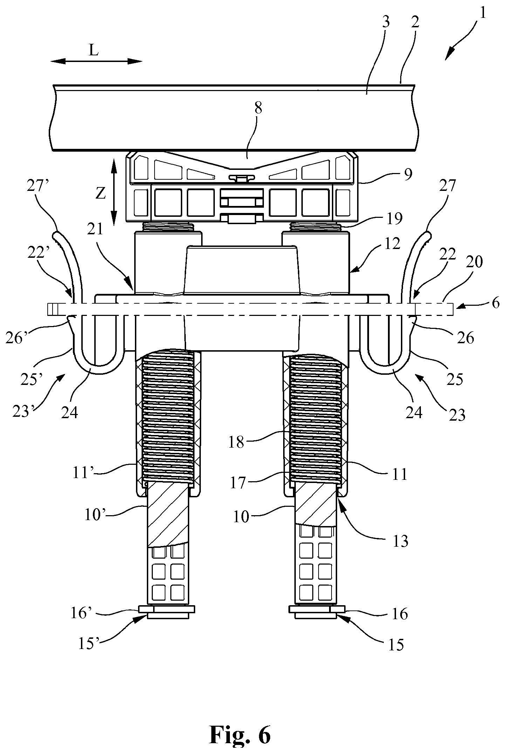

Um, wie in der Betriebsstellung in Fig. 3 und 4 bzw. der maximal eingerückten Betriebsstellung in Fig. 6 gezeigt, den Schleifkontakt 8 im Betrieb ständig in Zustellrichtung Z auf die Schleifleitung 2 hin gegen die Schleiffläche 5 zu bewegen bzw. zu halten, sind hier als Spiralfedern 17, 17' ausgebildete Federelemente vorgesehen. Da diese identisch ausgebildet sind, wird die Erfindung nachfolgend wiederum nur an der einen Spiralfeder 17 erläutert. Entsprechend gelten die Angaben hierzu auch für die Spiralfeder 17', wobei gleiche Teile wieder gleiche Bezugszeichen ergänzt um einen Apostroph aufweisen.

Die Spiralfeder 17 wird dabei vor dem Zusammenbau des Stromabnehmers 7 über den Führungsschaft 10 gestülpt, weist also einen Innendurchmesser auf, der größer ist als der Außendurchmesser des Führungsschaft 10. Wie insbesondere in Fig. 5 erkennbar, weist die Spiralfeder 17 hierzu also einen größeren Innendurchmesser als die größere Längsachse des elliptischen Querschnitts des Führungsschaft 10 auf. In Querrichtung Q hingegen ist wieder ein großer Abstand zwischen der kürzeren Querachse des elliptischen Querschnitts des Führungsschaft 10, sodass also auch zwischen Führungsschaft 10 und Spiralfeder 17 ein relativ großes Querspiel ΔQ in Querrichtung bereitgestellt wird.

Gemeinsam werden dann der Führungsschaft 10 mit übergestülpter Spiralfeder 17 von in den Zeichnungen oben in die Führungshülse 11 geschoben, und dann das Klemmelement 16 auf die Nut 15 in dem durch die Durchtrittsöffnung 13 ragenden, dem Schleifkontakt 8 abgewandten Ende des Führungsschafts 10 eingeschnappt. Dabei wird die Spiralfeder 17 so weit zusammengedrückt, dass der Führungsschaft 10 mit der Nut 15 durch die Durchtrittsöffnung 13 nach unten hinausragt, wie beispielsweise in Fig. 3, 6 oder 7 gezeigt.

Hierzu weist die Spiralfeder 17 einen Außendurchmesser auf, der an den Innendurchmesser des hohlzylindrischen Teils der Führungshülse 11 angepasst ist. Die nach innen kragende Durchtrittsöffnung 13 bildet dann innenseitig einen Anschlag für die Spiralfeder 17 und somit ein Widerlager, welches die Federkräfte der Spiralfeder 17 aufnehmen kann, wenn der Schleifkontakt 8 von oben mit Kraft beaufschlagt wird, beispielsweise beim Andrücken des gesamten Stromabnehmers 7 über den nicht gezeigten Zustellmechanismus an die Schleifleitung 2.

Wie insbesondere in Fig. 1 gut erkennbar, ist die Spiralfeder 17 im montierten Zustand in einem dem Schleifkontaktträger 9 ferneren ersten Federbereich als Druckfeder 18 und in einem dem Schleifkontaktträger 9 näheren zweiten Federbereich als Zugfeder 19 ausgebildet.

Der als Druckfeder 18 ausgebildete erste Federbereich hingegen dient dazu, dass der Schleifkontakt 8 ständig in Zustellrichtung Z zur Schleifleitung 2 hin bewegt bzw. gedrückt wird. Hierzu kann bei der in Fig. 1 gezeigten Normalstellung die Druckfeder 18 bereits so stark gespannt, also zusammengedrückt, sein, dass sie den Führungsschaft 10 soweit in Zustellrichtung Z zur Schleifleitung 2 hin drückt, dass das Klemmelement 16 außen an der Durchtrittsöffnung 13 anschlägt. Hierdurch wird sichergestellt, dass selbst bei am weitesten aus den Führungshülsen 11, 11' ausgefahrenen Führungsschäften 10, 10' ein ausreichender Druck vorhanden ist, um den Schleifkontakt 9 stets zur Schleifleitung 2 in Zustellrichtung 2 zu halten.

Der als Zugfeder 19 ausgebildete zweite Federbereich dient vor allem dazu, dass der Schleifkontakt 8 bei einer seitlichen Auslenkung in Querrichtung Q durch die Zugfeder 19 wieder in die durch diese vorgegebene Mittelstellung bezüglich der Querrichtung zurück bewegt wird.

Fig. 6 zeigt dann den Fall, in dem die Druckfeder 18 am stärksten gespannt ist, da der Schleifkontaktträger 9 fast am oberen Ende der Führungshülsen 11, 11' anliegt.

Dabei besteht die Spiralfeder 17 aus einer einstückigen Feder mit zwei Bereichen mit unterschiedlichen Federeigenschaften

Um die Halterung 12 des Stromabnehmers 7 an dem elektrischen Verbraucher 6 zu befestigen, weist der elektrische Verbraucher 6 eine Halteplatte 20 auf, welche beispielsweise ein Teil eines Gehäuses des Verbrauchers 6 oder ein extra hierfür vorgesehene Tragarm sein kann. In der Halteplatte 20 ist eine große, im Querschnitt an die Form der Halterung 12 angepasst Aufnahme 21 sowie sich daran seitlich in Längsrichtung L anschließende rechteckförmige Halteöffnungen 22, 22' vorgesehen. In die Halteöffnungen 22, 22' an den Führungshülsen 11, 11' angeformte, als Halteclips 23, 23' ausgebildete Halteelemente ein.

Die Halteclips 23, 23' weisen dabei jeweils einen in Zustellrichtung Z vom Schleifkontakt 8 weg nach unten verlaufenden, U-förmigen Bügel 24, 24' auf, dessen Außenschenkel 25, 25' bei in die Aufnahme 21 eingesetztem Stromabnehmer 7 an der äußeren Kante der Halteöffnung 22, 22' leicht nach außen federnd anliegen. Die Außenschenkel 25, 25' weisen jeweils nach außen weisende Rastnasen 26, 26' auf, welche bei eingesetzten Halteclips 23, 23' von unten an den äußeren Kanten der Halteöffnungen 22, 22' anliegen und ein ungewolltes Lösen des Stromabnehmers 7 von der Halteplatte 20 verhindern. Gelöst werden können die Halteclips 23, 23' dadurch, dass die Außenschenkel über die Halteöffnungen 22, 22' hinaus als Handhaben 27, 27' ausgestaltet sind, so dass der Monteur diese zum Stromabnehmer hin drückt und die Rastnasen 26, 26' nach innen und somit außer Eingriff mit den Kanten der Halteöffnungen 22, 22' gelangen und der Stromabnehmer 7 dann nach oben herausgenommen werden kann.

Die Halterung 12 nimmt dabei auch den weiteren Stromabnehmer 7' auf, wobei dessen Bestandteile entsprechend dem Stromabnehmer 7 ausgebildet sind, so dass die Ausführungen hierzu entsprechend gelten.

In einer zeichnerisch nicht dargestellten Ausführung kann der Schleifkontakt 8 bzw. der Schleifkontaktträger 9 auch direkt über mindestens ein Federelement, insbesondere eine Schrauben- oder Spiralfeder an der Halterung befestigt sein, ohne dass zusammenwirkende Führungsschäfte 10, 10' und Führungshülsen 11, 11' vorgesehen sind. In diesem Fall kann die Feder bevorzugt vor allem auf Zug beanspruchbar sein, um den Schleifkontakt 8 von einer ausgelenkten Stellung wieder in seine Normalstellung zurückzubewegen.

### Bezugszeichen

- 1: Schleifleitungssystem
- 2, 2': Schleifleitungen
- 3: Isolierprofil
- 4: Phasenleiterprofil
- 5: Schleiffläche
- 6: elektrischer Verbraucher
- 7, 7': Stromabnehmer
- 8, 8': Schleifkontakt
- 9, 9': Schleifkontaktträger
- 10, 10': Führungsschäfte (Führungselement)
- 11, 11': Führungshülsen (Führung)
- 12: Halterung Stromabnehmer
- 13, 13': Durchtrittsöffnung (Gegenanschlag)
- 14a, 14b: Positionierrücksprünge
- 15, 15': Nut
- 16, 16': Klemmelement (Anschlag)
- 17: Spiralfeder (Federelement)
- 18: Druckfeder (erster Federbereich)
- 19: Zugfeder (zweiter Federbereich)
- 20: Halteplatte verfahrbarer Verbraucher
- 21: Aufnahme für Halterung des Stromabnehmers
- 22, 22': Halteöffnungen
- 23, 23': Halteelement (Halteclip)
- 24, 24': elastischer U-förmiger Bügel
- 25, 25': Außenschenkel U-förmiger Bügel
- 26, 26': Rastnase
- 27, 27': Handhabe
- Z: Zustellrichtung Schleifkontakt
- L: Längsrichtung Schleifleitung
- Q: Querrichtung
- ΔQ: Querspiel Führungsschaft
- ΔL: Längsspiel Führungsschaft

## Patentansprüche

1. Stromabnehmer (7, 7') zur Versorgung eines längs einer Schleifleitung (2, 2') in deren Längsrichtung (L) verfahrbaren elektrischen Verbrauchers (6), mit einer Halterung (12) und einem gegenüber der Halterung (12) in eine Zustellrichtung (Z) von und zur Schleifleitung (2, 2') beweglichen, in einem Schleifkontaktträger (9) angeordneter Schleifkontakt (8), wobei der Schleifkontakt (8) zusätzlich in eine im wesentlichen quer zur Längsrichtung (L) und zur Zustellrichtung (Z) verlaufende Querrichtung (Q) beweglich ist, **dadurch gekennzeichnet,**
**dass** zwischen Schleifkontakt (8) und Halterung (12) ein als Spiralfeder ausgebildetes Federelement (17) vorgesehen ist, wobei das Federelement (17) in einem ersten Federbereich (18) vor allem in Zustellrichtung (Z) und auf Druck wirkt, und wobei das Federelement (17) in einem zweiten Federbereich (19) vor allem in Querrichtung (Q) und auf Zug wirkt.

2. Stromabnehmer (7, 7') nach Anspruch 1, **dadurch gekennzeichnet, dass** der zweite Federbereich (19) näher an dem Schleifkontakt (8) liegt als der erste Federbereich (18).

3. Stromabnehmer (7, 7') nach einem der voranstehenden Ansprüche, **dadurch gekennzeichnet, dass** der Schleifkontakt (8) und/oder der Schleifkontaktträger (9) mindestens ein sich in Zustellrichtung (Z) erstreckendes Führungselement (10, 10') aufweist.

4. Stromabnehmer (7, 7') nach Anspruch 3, **dadurch gekennzeichnet, dass** das Führungselement (10, 10') in einer Führung (11, 11') der Halterung (12) in Zustellrichtung (Z) beweglich ist.

5. Stromabnehmer (7, 7') nach Anspruch 4, **dadurch gekennzeichnet, dass** ein Anschlag (16) des Führungselements (10, 10') mit einem in Zustellrichtung (Z) näher am Schleifkontakt (8) liegenden Gegenanschlag (13, 13') der Führung (11, 11') zusammenwirkt.

6. Stromabnehmer (7, 7') nach Anspruch 3, 4 oder 5, **dadurch gekennzeichnet, dass** zwischen Führungselement (10, 10') und Federelement (17) ein Spiel (ΔQ) in Querrichtung (Q) besteht.

7. Stromabnehmer (7, 7') nach Anspruch 6, **dadurch gekennzeichnet, dass** das Spiel (ΔQ) in Querrichtung (Q) größer ist als ein Spiel (ΔL) zwischen dem Führungselement (10, 10') und Federelement (17) in Längsrichtung (L).

8. Stromabnehmer (7, 7') nach Anspruch 6 oder 7, **dadurch gekennzeichnet, dass** das Federelement (17) das Führungselement (10, 10') umgibt.

9. Stromabnehmer (7, 7') nach Anspruch 8, **dadurch gekennzeichnet, dass** das Federelement (17) und das Führungselement (10, 10') einen voneinander unterschiedlichen Querschnitt aufweisen, wobei der Abstand zwischen Führungselement (10, 10') und Federelement (17) in Querrichtung (Q) größer ist als in Längsrichtung (L).

10. Stromabnehmer (7, 7') nach Anspruch 8 oder 9, **dadurch gekennzeichnet, dass** das Federelement (17) einen kreisförmigen und das Führungselement (10, 10') einen von der Kreisform abweichenden Querschnitt hat, wobei der Abstand zwischen Führungselement (10, 10') und Federelement (17) in Querrichtung (Q) größer ist als in Längsrichtung (L).

11. Stromabnehmer (7, 7') nach Anspruch 8, 9 oder 10, **dadurch gekennzeichnet, dass** die Breite des Führungselements (10, 10') in Querrichtung (Q) geringer ist als die Länge des Führungselements (10, 10') in Längsrichtung (L).

12. Stromabnehmer (7, 7') nach einem der Ansprüche 6 bis 11, **dadurch gekennzeichnet, dass** das Federelement (17) zumindest teilweise in der Führung (11, 11') angeordnet ist und sich an der Halterung (12) zumindest einseitig abstützt.

13. Schleifleitungssystem (1) mit einer Schleifleitung (2, 2') und mindestens einem an der Schleifleitung (2, 2') in deren Längsrichtung (L) verfahrbaren Stromabnehmer (7, 7') nach einem der voranstehenden Ansprüche, wobei der Schleifkontakt (8, 8') zur Kontaktierung mit mindestens einem elektrischen leitenden Leiterprofil der Schleifleitung (2, 2') zur Versorgung des längs der Schleifleitung (2, 2') verfahrbaren elektrischen Verbrauchers (6) ausgebildet ist..

## Claims

1. Current collector (7, 7') for supplying an electrical consumer (6) that is movable along a conductor line (2, 2') in its longitudinal direction (L), with a holder (12) and a sliding contact (8) arranged in a sliding contact carrier (9) and movable relative to the holder (12) in a delivery direction (Z) from and to the conductor line (2, 2'), wherein the sliding contact (8) is additionally movable in a transverse direction (Q) extending substantially transversely to the longitudinal direction (L) and to the delivery direction (Z), **characterized in that** a spring element (17) configured as a spiral spring is provided between the sliding contact (8) and the holder (12), wherein the spring element (17) primarily acts in the delivery direction (Z) and on pressure in a first spring range (18), and wherein the spring element (17) primarily acts in the transverse direction (Q) and on traction in a second spring range (19).

2. Current collector (7, 7') according to claim 1, **characterized in that** the second spring area (19) is closer to the sliding contact (8) than the first spring area (18).

3. Current collector (7, 7') according to one of the preceding claims, **characterized in that** the sliding contact (8) and/or the sliding contact carrier (9) has at least one guiding element (10, 10') extending in the delivery direction (Z).

4. Current collector (7, 7') according to claim 3, **characterized in that** the guiding element (10, 10') is movable in the delivery direction (Z) within a guide (11, 11') of the holder (12).

5. Current collector (7, 7') according to claim 4, **characterized in that** a stop (16) of the guiding element (10, 10') interacts with a counter-stop (13, 13') of the guide (11, 11') located closer to the sliding contact (8) in the delivery direction (Z).

6. Current collector (7, 7') according to claim 3, 4 or 5, **characterized in that** there exists a clearance (ΔQ) in the transverse direction (Q) between the guiding element (10, 10') and the spring element (17).

7. Current collector (7, 7') according to claim 6, **characterized in that** the clearance (ΔQ) in the transverse direction (Q) is greater than a clearance (ΔL) between the guiding element (10, 10') and spring element (17) in the longitudinal direction (L).

8. Current collector (7, 7') according to claim 6 or 7, **characterized in that** the spring element (17) surrounds the guiding element (10, 10').

9. Current collector (7, 7') according to claim 8, **characterized in that** the cross-sections of the spring element (17) and the guiding element (10, 10') are different from each other, wherein the distance between the guiding element (10, 10') and the spring element (17) is greater in the transverse direction (Q) than in the longitudinal direction (L).

10. Current collector (7, 7') according to claim 8 or 9, **characterized in that** the spring element (17) has a circular cross-section and the guiding element (10, 10') has a cross-section deviating from the circular shape, whereby the distance between the guiding element (10, 10') and the spring element (17) is greater in the transverse direction (Q) than in the longitudinal direction (L).

11. Current collector (7, 7') according to claim 8, 9 or 10, **characterized in that** the width of the guiding element (10, 10') in the transverse direction (Q) is less than the length of the guiding element (10, 10') in the longitudinal direction (L).

12. Current collector (7, 7') according to one of claims 6 to 11, **characterized in that** the spring element (17) is arranged at least partially in the guide (11, 11') and is supported on the holder (12) at least unilaterally.

13. Sliding contact system (1) with a conductor line (2, 2') and at least one current collector (7, 7') movable along the conductor line (2, 2') in its longitudinal direction (L) according to one of the preceding claims, wherein the sliding contact (8, 8') is configured to make contact with at least one electrically conductive conductor profile of the conductor line (2, 2') for supplying the electrical consumer (6) that can be moved along the conductor line (2, 2').

## Revendications

1. Collecteur de courant (7, 7') pour l'alimentation d'un consommateur électrique (6) pouvant être déplacé le long d'une ligne de contact (2, 2') dans sa direction longitudinale (L), comportant un moyen de maintien (12) et un contact à glissement (8) pouvant être déplacé, par rapport au moyen de maintien (12), dans une direction d'avance (Z) depuis la ligne de contact (2, 2') et vers celle-ci et disposé dans un support pour contact glissant (9), dans lequel le contact à glissement (8) peut en outre être déplacé dans une direction transversale (Q) s'étendant sensiblement transversalement à la direction longitudinale (L) et à la direction d'avance (Z), **caractérisé en ce qu'**est prévu entre le contact à glissement (8) et le moyen de maintien (12) un élément formant ressort (17) réalisé en tant que ressort hélicoïdal, dans lequel l'élément formant ressort (17) agit dans une première zone de ressort (18), surtout dans la direction d'avance (Z) et avec compression, et dans lequel l'élément formant ressort (17) agit dans une seconde zone de ressort (19), surtout dans la direction transversale (Q) et avec traction.

2. Collecteur de courant (7, 7') selon la revendication 1,
**caractérisé en ce que** la seconde zone de ressort (19) est plus proche du contact à glissement (8) que la première zone de ressort (18).

3. Collecteur de courant (7, 7') selon l'une des revendications précédentes,
**caractérisé en ce que** le contact à glissement (8) et/ou le support pour contact à glissement (9) présentent au moins un élément de guidage (10, 10') s'étendant dans la direction d'avance (Z).

4. Collecteur de courant (7, 7') selon la revendication 3,
**caractérisé en ce que** l'élément de guidage (10, 10') peut être déplacé dans un guide (11, 11') du moyen de maintien (12) dans la direction d'avance (Z).

5. Collecteur de courant (7, 7') selon la revendication 4,
**caractérisé en ce qu'**une butée (16) de l'élément de guidage (10, 10') coopère avec une contre-butée (13, 13') du guide (11, 11') située plus près du contact à glissement (8) dans la direction d'avance (Z).

6. Collecteur de courant (7, 7') selon la revendication 3, 4 ou 5,
**caractérisé en ce qu'il** existe un jeu (ΔQ) dans la direction transversale (Q) entre l'élément de guidage (10, 10') et l'élément formant ressort (17).

7. Collecteur de courant (7, 7') selon la revendication 6,
**caractérisé en ce que** le jeu (ΔQ) dans la direction transversale (Q) est supérieur à un jeu (ΔL) entre l'élément de guidage (10, 10') et l'élément formant ressort (17) dans la direction longitudinale (L).

8. Collecteur de courant (7, 7') selon la revendication 6 ou 7,
**caractérisé en ce que** l'élément formant ressort (17) entoure l'élément de guidage (10, 10').

9. Collecteur de courant (7, 7') selon la revendication 8,
**caractérisé en ce que** l'élément formant ressort (17) et l'élément de guidage (10, 10') présentent des sections transversales différente l'une de l'autre, dans lequel la distance entre l'élément de guidage (10, 10') et l'élément formant ressort (17) est plus grande dans la direction transversale (Q) que dans la direction longitudinale (L).

10. Collecteur de courant (7, 7') selon la revendication 8 ou 9,
**caractérisé en ce que** l'élément formant ressort (17) possède une section transversale circulaire et l'élément de guidage (10, 10') possède une section transversale qui s'écarte de la forme circulaire, dans lequel la distance entre l'élément de guidage (10, 10') et l'élément formant ressort (17) est plus grande dans la direction transversale (Q) que dans la direction longitudinale (L).

11. Collecteur de courant (7, 7') selon la revendication 8, 9 ou 10,
**caractérisé en ce que** la largeur de l'élément de guidage (10, 10') dans la direction transversale (Q) est inférieure à la longueur de l'élément de guidage (10, 10') dans la direction longitudinale (L).

12. Collecteur de courant (7, 7') selon l'une des revendications 6 à 11,
**caractérisé en ce que** l'élément formant ressort (17) est disposé au moins partiellement dans le guide (11, 11') et s'appuie au moins d'un côté sur le moyen de maintien (12).

13. Système à ligne de contact (1) comportant une ligne de contact (2, 2') et au moins un collecteur de courant (7, 7') selon l'une des revendications précédentes pouvant être déplacé sur la ligne de contact (2, 2') dans sa direction longitudinale (L), dans lequel le contact à glissement (8, 8') est configuré pour la mise en contact avec au moins un profilé conducteur électroconducteur de la ligne de contact (2, 2') pour l'alimentation du consommateur électrique (6) pouvant être déplacé le long de la ligne de contact (2, 2').
